# EUROPÄISCHE PATENTSCHRIFT

(11) **EP 3 020 613 B1**
(45) Veröffentlichungstag und Bekanntmachung des Hinweises auf die Patenterteilung: **28.06.2017**
(21) Anmeldenummer: 14192896.0
(22) Anmeldetag: 12.11.2014
(51) Int. Cl.: B62B 3/18, B62B 3/00

(54) **Rollcontainer mit klappbarer Bodenplatte**
Roller container with folding floor panel
Conteneur roulant doté d'un panneau de sol pliable

(43) Veröffentlichungstag der Anmeldung: 18.05.2016
(73) Patentinhaber: Rotom Nederland B.V., 5692 AK Son (NL)
(72) Erfinder: Kuiper, Arjan, 5282 SN in Boxtel (NL)
(74) Vertreter: Patentanwälte Bauer Vorberg Kayser

(56) Entgegenhaltungen:
- EP-A1- 2 597 011
- EP-A2- 0 048 135
- FR-A1- 2 852 279
- GB-A- 2 045 698
- GB-A- 2 261 410
- US-A- 2 738 201
- US-A- 3 861 768

## Beschreibung

Die Erfindung betrifft einen Rollcontainer, umfassend einen sich horizontal erstreckenden Grundrahmen, an dessen einer Seite zwei sich gegenüber liegende, vertikale Seitenwände um eine vertikale Achse schwenkbar angebracht sind. Dabei weist der Rollcontainer ferner eine um eine horizontale Schwenkachse klappbare Bodenplatte auf, die aus einer horizontalen Lage in eine aufrechte Lage schwenkbar ist.

Rollbare Transportgestelle zu Aufnahme, Lagerung und Transport von Gegenständen werden oftmals als Rollcontainer bezeichnet. Hierbei handelt es sich um Behälter, die typischerweise einen Boden und wenigstens zwei Seitenwände aufweisen, um Gegenstände auf dem Boden stapeln zu können. An der Unterseite des Bodens sind Rollen bzw. Räder angebracht, um das Transportgestell mit oder ohne Gegenstände darauf verfahren zu können. Der Boden und die Seitenwände können dabei aus unterschiedlichen Materialien ausgebildet sein. Beispielsweise kann es sich hierbei um Holz, Kunststoff, Metall und/oder Textilgeflechte handeln. Um ein rollbares Transportgestell möglichst stabil und gleichzeitig leicht auszubilden, haben sich sowohl für den Boden, als auch für die Seitenwände Metallgitter mit einer geeigneten Maschung als vorteilhaft erwiesen.

Derartige Rollcontainer werden insbesondere im Lager- bzw. Logistikbereich eingesetzt und dabei oftmals leer an einer Stelle gesammelt, bevor sie für den nächsten Einsatz gebraucht werden. Leere Rollcontainer haben jedoch einen hohen Platzbedarf, so dass Rollcontainer entwickelt wurden, die platzsparend ineinander schiebbar sind (nestable). Dabei werden beispielsweise Rollcontainer mit einem sogenannten A-Frame verwendet, der den Grundrahmen des Transportgestells bildet und an dem wenigstens ein schwenkbarer Boden und mehrere schwenkbare Seitenwände angebracht sind. Diese beweglichen Komponenten können so verschwenkt werden, dass der Rollcontainer aus einer Gebrauchsform in eine Form umwandelbar ist, in der mehrere dieser Container platzsparend ineinander geschoben werden können.

Die Europäische Patentanmeldung EP 0 475 501 A1 zeigt beispielsweise einen solchen ineinander schiebbaren Rollcontainer nach dem Prinzip eines A-Frames. Dazu ist ein horizontaler, trapezförmiger Grundrahmen vorgesehen, an dessen breitem Ende eine vertikale Rückwand angebracht. An den vertikalen Seitenkanten dieser Rückwand sind zwei Seitenwände schwenkbar angebracht, so dass die Seitenwände um eine vertikale Achse schwenkbar sind. Ferner ist eine Bodenplatte vorgesehen, die schwenkbar an dem Grundrahmen oder einer Seitenwand angebracht ist. Die Bodenplatte ist dabei um eine horizontale Achse schwenkbar. Die Bodenplatte ist rechteckig, und bei herunter geklappter Bodenplatte sind die Seitenwände nach außen in eine Position geschwenkt, in der sie zusammen mit der Rückwand einen quaderförmigen Raum zur Aufnahme von Gegenständen auf der Bodenplatte bilden. Soll der Rollcontainer in einen anderen Rollcontainer der gleichen Bauart eingeschoben werden, wird die Bodenplatte aus ihrer horizontalen Lage nach oben in eine aufrechte Lage geklappt und die Seitenwände haben dann Raum, um nach innen geschwenkt zu werden. Dabei können sie soweit geschwenkt werden, dass sie parallel zur Rückwand liegen, wie es die Ausführungsform der EP 0 475 501 A1 vorsieht. Die trapezförmigen Grundrahmen mehrere Rollcontainer können so ineinander geschoben werden, ohne dass die Seiten- und Rückwände dies behindern.

Je nach Bauform des Rollcontainers reicht es jedoch auch aus, die Seitenwände nur soweit nach innen zu schwenken, dass sie V-förmig entlang der Seitenstreben des trapezförmigen Grundrahmens liegen. Auf diese Weise hat der Rollcontainer die Form eines Prismas mit einer trapezförmigen Grundfläche, so dass der Container mit seiner schmalen Vorderseite in die breitere Rückseite eines anderen Rollcontainer eingeschoben werden kann, wenn die Rollcontainer keine Rückwand aufweisen. Eine solche Ausführungsform wird beispielsweise in der Europäischen Patentanmeldung EP 2 597 011 A1 beschrieben.

Bei solchen Rollcontainern ist es stets erforderlich, die Bodenplatte in der aufrechten Position zu halten, damit diese nicht durch ein ungewolltes Herunterklappen die Umwandlung des Rollcontainers und/oder das Einschieben des Gestells in einen anderen Rollcontainer behindert. Hierzu sind üblicherweise an einer Seiten- oder Rückwand Halterungen vorgesehen, mit denen die Bodenplatte in der aufrechten Lage an einer diese Wände fixiert werden kann. Hierbei handelt es sich typischerweise um Haken oder Rastelemente, über die sich eine temporäre Fixierung beispielsweise der oberen Kante der Bodenplatte an einer vertikalen Wand erreichen lässt. Diese Halterungen müssen jedoch zunächst betätigt und für ein Herunterklappen der Bodenplatte auch wieder gelöst werden, was mit erhöhtem Aufwand verbunden ist.

Aufgabe der Erfindung ist es daher, einen gattungsgemäßen Rollcontainer so auszubilden, dass eine schwenkbare Bodenplatte auf einfachere Art in einer aufrechten Position gehalten werden kann.

Erfindungsgemäß wird diese Aufgabe durch einen Rollcontainer gemäß dem unabhängigen Anspruch 1 gelöst. Vorteilhafte Weiterbildungen dieses Rollcontainers ergeben sich aus dem Unteranspruch 2. Es ist darauf hinzuweisen, dass die in den Ansprüchen einzeln aufgeführten Merkmale in beliebiger, technisch sinnvoller Weise miteinander kombiniert werden können und weitere Ausgestaltungen der Erfindung aufzeigen. Die Beschreibung charakterisiert und spezifiziert die Erfindung insbesondere im Zusammenhang mit den Figuren zusätzlich.

Der erfindungsgemäße Rollcontainer umfasst einen sich horizontal erstreckenden Grundrahmen, an dessen einer Seite zwei sich gegenüber liegende, vertikale Seitenwände um eine vertikale Achse schwenkbar angebracht sind. Der Rollcontainer weist ferner eine um eine horizontale Schwenkachse klappbare Bodenplatte auf, die aus einer im Wesentlichen horizontalen Lage oberhalb des Grundrahmens und zwischen den beiden Seitenwänden in eine aufrechte Lage schwenkbar ist. Somit hat die Bodenplatte eine Gebrauchslage, in der sie im unteren Bereich des Rollcontainers zwischen zwei Seitenwänden auf dem Grundrahmen liegt und dort eine Fläche zur Stapelung von Gegenständen bildet. Wird die Bodenplatte nach oben geklappt, können die Seitenwände jeweils um eine vertikale Achse so verschwenkt werden, dass der Rollcontainer in diesem Zustand in einen anderen Rollcontainer eingeschoben werden kann.

Erfindungsgemäß ist im Bereich der Schwenkachse der Bodenplatte ein Haltemechanismus vorgesehen, der dazu ausgebildet ist, die Bodenplatte an einem Herunterklappen aus der aufrechten Lage zu hindern. Somit müssen keine Halterungen vorgesehen werden, mit denen die Bodenplatte im Bereich ihrer Fläche oder insbesondere oberen Kante an einer vertikalen Wand fixiert wird, sondern ein integrierter Haltemechanismus hält die Bodenplatte ohne manuelles Tätigwerden in der aufrechten Lage bzw. hindert die Bodenplatte zumindest an einem Herunterklappen. Der Haltemechanismus greift dabei im Bereich der Schwenkachse an, so dass er ein Drehen der Bodenplatte um ihre Schwenkachse behindert.

Dieser Haltemechanismus kann nicht nur zum Halten der Bodenplatte in der aufrechten Lage, sondern auch zur Unterstützung des Hochklappens ausgebildet sein. Das Hochklappen der Bodenplatte erfolgt üblicherweise manuell, was für die betreffende Person bei einer Vielzahl von Rollcontainern mit wiederholtem Bücken und Anheben der Bodenplatte verbunden ist. Ist der Haltemechanismus jedoch so ausgebildet, dass er die Bodenplatte beispielsweise bei leichtem Stoß von unten selbsttätig nach oben klappt, können die Arbeitsvorgänge bei der Umwandlung des Rollcontainers erheblich vereinfacht werden. Insbesondere kann eine solche Funktion durch elastische Elemente im Bereich der Schwenkachse realisiert werden, die bei herunter geklappter Bodenplatte belastet sind und sich auf dem Weg der Bodenplatte in die aufrechte Lage elastisch rückstellend verhalten.

Der Grundrahmen des Rollcontainers kann verschiedene Formen und beispielsweise auch bewegliche Komponenten haben, um seine Form für ein Einschieben in andere Rollcontainer verändern zu können. In einer bevorzugten Ausführungsform der Erfindung ist der Grundrahmen jedoch von vorneherein trapezförmig ausgeformt und die vertikalen Seitenwände sind an seiner breiteren Seite um eine vertikale Achse schwenkbar angebracht. Am breiteren Ende des Grundrahmens können die Seitenwände somit so verschwenkt werden, dass sie entweder entlang der Seitenstreben des trapezförmigen Grundrahmens verlaufen. Hierfür ist die Bodenplatte hochgeklappt, so dass der Rollcontainer mit seiner schmaleren Seite in die breitere Seite eines anderen Rollcontainers der gleichen Art eingeschoben werden kann. Die Seitenwände der diversen Rollcontainer liegen dabei V-förmig ineinander. Werden die Seitenwände dagegen über die Seitenstreben hinaus nach außen in eine Position geschwenkt, in der sie in etwa parallel zueinander verlaufen, kann die Bodenplatte zwischen den Seitenwänden herunter geklappt werden, bis sie auf dem Grundrahmen zum Liegen kommt.

Der Rollcontainer kann neben den zwei sich gegenüber liegenden Seitenwänden auch eine Rückwand aufweisen, wie es beispielsweise die Ausführungsform der EP 0 475 501 A1 vorsieht. In dieser Ausführungsform könnte ebenfalls ein trapezförmiger Grundrahmen verwendet werden, um mehrere Rollcontainer ineinander schieben zu können. Die zwei Seitenwände würden dann im hinteren Bereich des Grundrahmens so weit aufeinander zu verschwenkt, dass sie parallel zueinander und zur Rückwand liegen. Werden mehrere Rollcontainer ineinander geschoben, schiebt sich erneut das schmalere Ende eines trapezförmigen Grundrahmens in das breitere Ende des nächsten Rollcontainers. Die Seitenwände der diversen Rollcontainer liegen dabei im Wesentlichen parallel zueinander.

Die erfindungsgemäße Bodenplatte mit einem Haltemechanismus, welcher die Bodenplatte an einem Herabfallen aus der aufrechten Position hindert, kann für diese und auch weitere Ausführungsformen von ineinander schiebbaren Rollcontainern eingesetzt werden. Vorzugsweise wird die Bodenplatte dabei in Richtung einer Seitenwand geklappt, sie kann jedoch auch in Richtung einer Rückwand geklappt werden. Bei beiden Ausführungsformen ist es vorteilhaft, dass die Bodenplatte nicht an einer Seiten- oder Rückwand fixiert werden muss.

Ein Haltemechanismus kann dabei insbesondere so ausgebildet sein, dass er die Bodenplatte durch Federkraft und/oder Reibung im Bereich der Schwenkachse an einem Drehen um die Schwenkachse hindert. Hierzu können beispielsweise geeignete Federelemente eingesetzt werden, die beim Herunterklappen der Bodenplatte gespannt werden. In der aufrechten Lage der Bodenplatte bringen diese somit im Bereich der Schwenkachse einen Druck auf die Bodenplatte auf, welcher die Bodenplatte an einem ungewollten Herunterklappen hindert und die Bodenplatte somit in der aufrechten Lage hält. Die Federkräfte sind jedoch vorzugsweise so ausgelegt, dass sie ohne Weiteres auch überwindbar sind. Dies kann beispielsweise ab einer bestimmten Winkelstellung der Bodenplatte erfolgen, in der die Bodenplatte schwer genug ist, um sie vollständig gegen die Federkraft nach unten fallen zu lassen. Die Bodenplatte muss dann von einer Person nur etwas nach unten geklappt werden, bis sie selbsttätig in ihre horizontale Endlage auf dem Grundrahmen fällt. Das Gleiche kann beim Hochklappen der Bodenplatte erfolgen, wobei die Bodenplatte beispielsweise leicht mit dem Fuß von unten angestoßen wird, bis die Rückstellkraft der Feder die Bodenplatte selbsttätig weiter in ihre aufrechte Lage bewegt.

Als Federelemente können beispielsweise metallische Spiralfedern, Torsionsfedern, Blattfedern, etc. oder Kombinationen davon verwendet werden, die entsprechend eingespannt werden. Es ist auch möglich, elastische Elemente aus Gummi als Federelemente einzusetzen. Diese können bei der Bewegung der Bodenplatte in ihre horizontale Lage gequetscht oder gedehnt werden, so dass sie in die andere Richtung ebenfalls rückstellend elastisch wirken.

Neben solchen elastisch rückstellenden Federelementen können in dem Haltemechanismus auch Elemente eingesetzt werden, welche bei Stellung der Bodenplatte in der aufrechten Lage eine Reibung zwischen Bodenplatte und einem anderen Bauteil erzeugen, durch welche die Bodenplatte in der aufrechten Lage gehalten wird. Beispielsweise können hierzu Gummielemente vorgesehen sein, die bei Stellung der Bodenplatte in der aufrechten Lage mit anderen Bauteilen oder auch anderen Gummielementen in Kontakt kommen, wobei die Reibung zwischen den Gummielementen ausreicht, um die Bodenplatte zu halten. Die Reibkraft kann jedoch manuell überwunden werden, wenn die Bodenplatte leicht nach unten bewegt wird und die Gummielemente den Kontakt zueinander verlieren. Derartige elastische Elemente können auch konstanten Kontakt zueinander haben, wobei sie bei Bewegung der Bodenplatte in die aufrechte Lage stärker gegeneinander gedrückt werden, so dass sich die Reibung erhöht. Dies kann beispielsweise durch keilförmige Elemente erreicht werden. Solche Reibelemente können auch mit Federelementen kombiniert werden.

Die schwenkbare Lagerung der Bodenplatte kann auf unterschiedliche Arten beispielsweise über Scharniere erfolgen. Vorzugsweise ist die Bodenplatte dabei schwenkbar an einer horizontalen Schwenkstage aufgehängt. Hierzu können an einer Kante der Bodenplatte ein oder mehrere bandförmige Schwenkhalterungen angebracht sein, welche die Schwenkstange vorzugsweise vollständig umschließen. Komponenten des Haltemechanismus können inner- und/oder außerhalb eine solchen Schwenkstange vorgesehen sein.

In einer Ausführungsform der Erfindung ist vorgesehen, dass wenigstens eine Torsionsfeder spiralförmig um eine solche Schwenkstange herum gewunden ist, wobei die Drahtenden der Torsionsfeder so zwischen der Bodenplatte und einem anderen Bauteil des Rollcontainers eingespannt sind, dass die Torsionsfeder bei einer Bewegung der Bodenplatte aus der aufrechten Lage in die horizontale Lage gespannt wird. In der aufrechten Lage der Bodenplatte muss somit eine bestimmte Kraft aufgebracht werden, um die Federkraft der Torsionsfeder zu überwinden. Diese Kraft ist vorzugsweise größer als diejenigen Kräfte, die in dieser Lage durch das Gewicht der Bodenplatte und ihre eventuellen Bewegungen erzeugt werden können.

Die Bodenplatte kann am Grundrahmen, einer der Seitenwände oder an einer Rückwand angebracht sein. In einer Ausführungsform ist die Bodenplatte schwenkbar am unteren Ende einer Seitenwand angebracht. In dieser Ausführungsform können die Drahtenden der zuvor beschriebenen Torsionsfeder zwischen der Bodenplatte und der Seitenwand eingespannt sein. Die Schwenkstange zur Lagerung der Bodenplatte kann in wenigstens einer Aufnahme an einer Seitenwand gehalten sein. So ist es möglich, die Schwenkstange durch die Federwicklung ein oder mehrerer Torsionsfedern zu führen und anschließend in die Schwenkhalterung an einer Seitenwand einzuhängen. Auf diese Weise kann unter Umständen auch eine Austauschbarkeit der Federn realisiert werden, wenn diese bei sehr langem Gebrauch verschleißen und ihre Federkraft verlieren.

Weitere Vorteile, Besonderheiten und zweckmäßige Weiterbildungen der Erfindung ergeben sich aus den Unteransprüchen und der nachfolgenden Darstellung bevorzugter Ausführungsbeispiele anhand der Abbildungen.

Von den Abbildungen zeigt:
- Fig. 1: eine dreidimensionale Ansicht eines Ausführungsbeispiels des erfindungsgemäßen Rollcontainers,
- Fig. 2: eine Unteransicht des Rollcontainers gemäß Fig. 1;
- Fig. 3: eine Einzeldarstellung eines trapezförmigen Grundrahmens;
- Fig. 4a: eine dreidimensionale Ansicht einer Bodenplatte;
- Fig. 4b: eine Seitenansicht der Bodenplatte gemäß Fig. 4a;
- Fig. 5: eine Seitenansicht des Rollcontainers gemäß Fig. 1;
- Fig. 6a: eine Queransicht einer Ausführungsform einer Feder für die federnde Lagerung einer Bodenplatte;
- Fig. 6b: eine Längsansicht einer Feder gemäß Fig. 6a;
- Fig. 7a: eine schematische Darstellung einer federnd gelagerten Bodenplatte in der horizontalen Position; und
- Fig. 7b: die Bodenplatte gemäß Fig. 7a in einer aufrechten Position.

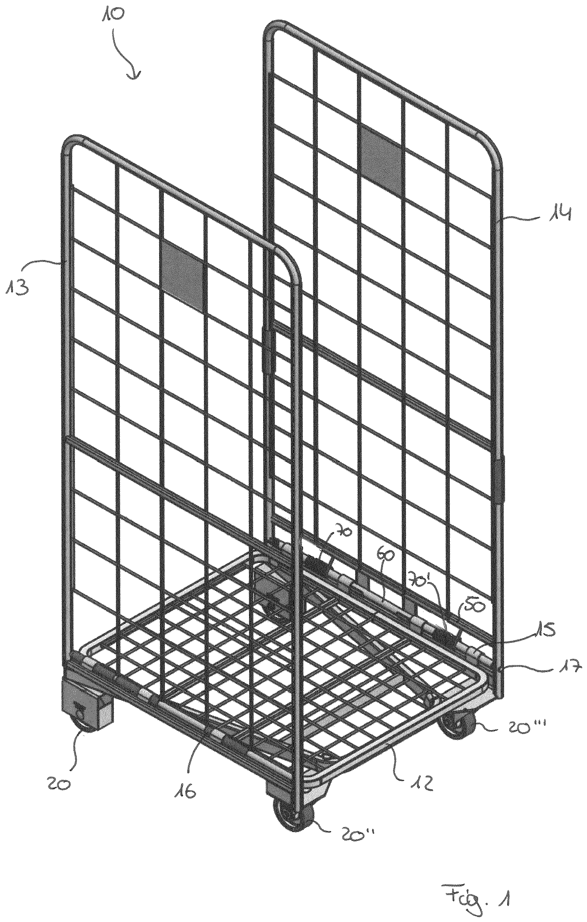

Fig. 1 zeigt eine dreidimensionale Ansicht einer Ausführungsform des erfindungsgemäßen Rollcontainers 10. Dabei wird der Rollcontainer 10 im Wesentlichen durch eine horizontale Bodenplatte 12 und zwei vertikale Seitenwände 13 und 14 gebildet, die sich gegenüber liegen. Die Bodenplatte 12 ist rechteckig und auf ihr können Gegenstände gestapelt werden, die seitlich durch die Seitenwände 13, 14 gehalten werden. Sowohl die Bodenplatte 12, als auch die Seitenwände 13, 14 sind dabei vorzugsweise als Metallgitter mit einer relativ großen Maschung ausgeführt. Es kann jedoch auch eine andere Maschengröße gewählt werden, um beispielsweise kleinere Gegenstände am Herausfallen durch die Seitenwände hindurch zu hindern. Um ein Herausfallen von Gegenständen an der offenen Rück- und Vorderseite zu verhindern, können Gurte quer zwischen den Seitenwänden gespannt werden. Als Material für die Bodenplatte und/oder die Seitenwände 13, 14 können auch andere geeignete Materialien wie beispielsweise Kunststoff gewählt werden.

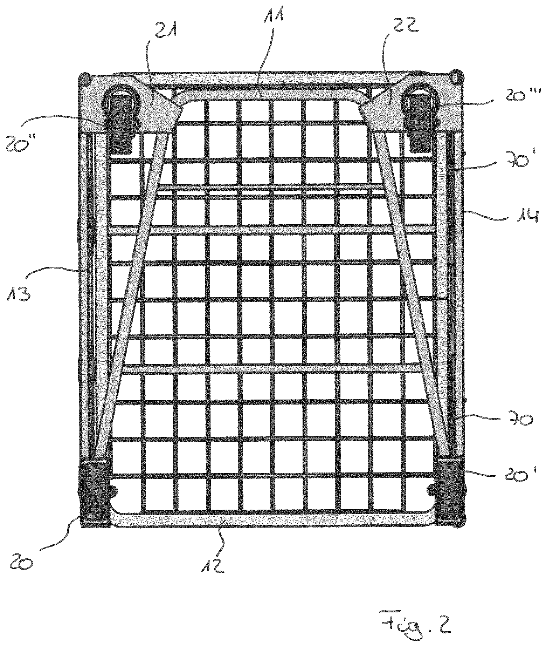

Die Seitenwände 13, 14 sind vorzugsweise an einem horizontal verlaufenden, trapezförmigen Grundrahmen 11 angebracht (A-Rahmen), wie er auch der Unteransicht der Fig. 2 zu entnehmen ist. Am breiteren Ende dieses Grundrahmens 11 sind zwei Rollen 20 und 20' angebracht. Zwei weitere Rollen 20" und 20'" sind an plattenförmigen Auslegern 21, 22 angebracht. Diese Ausleger 21, 22 sind fest mit den Seitenwänden 13, 14 verbunden und greifen durch Winkel im Bereich seines schmalen Endes von unten in den Grundrahmen 11 ein. In der äußeren Position der schwenkbaren Seitenwände 13, 14 liegen die Ausleger 21, 22 an der Innenseite des Grundrahmens 11 an, so dass die Seitenwände 13, 14 nicht weiter nach außen schwenken können. Die Ausleger 21, 22 bilden so eine Art Anschlag aus. Vorzugsweise stehen die Rollen 20, 20' am breiteren Ende des Grundrahmens 11 fest, während es sich bei den Rollen 20", 20'" am schmaleren Ende um Schwenkrollen handelt.

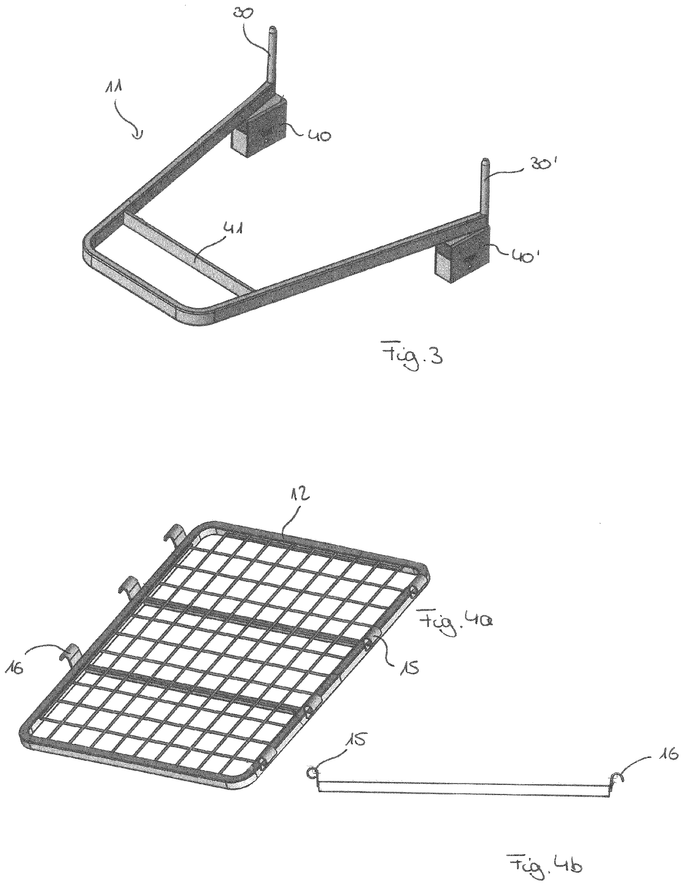

Fig. 3 zeigt eine Einzeldarstellung eines solchen Grundrahmens 11 mit zwei Radkästen 40 und 40' für die fest stehenden Rollen 20 und 20'. Ferner weist der Grundrahmen 11 zur Stabilisierung eine Rahmenstrebe 41 auf. Außerdem sind am breiteren Ende des Grundrahmens 11 zwei vertikale Schwenkbolzen 30 und 30' vorgesehen. Auf diese sind entsprechende Aufnahmen der Seitenwände 13, 14 aufgesteckt, so dass die Seitenwände 13, 14 um diese Schwenkbolzen 30, 30' drehbar sind.

In der Fig. 1 befinden sich die Seitenwände 13, 14 in einer Position, in welcher der Rollcontainer 10 für die Lagerung bzw. den Transport von Gegenständen auf der Bodenplatte 12 nutzbar ist. In diesem Zustand ist der Rollcontainer 10 jedoch nicht in einen anderen Rollcontainer der gleichen Bauart einschiebbar. Dazu werden die Seitenwände 13, 14 um die Schwenkbolzen 30, 30' herum nach innen geklappt. Damit dies erfolgen kann, wird die Bodenplatte 12 zuvor aus ihrer horizontalen Lage in eine aufrechte Lage hochgeklappt. Dazu kann die Bodenplatte 12 beispielsweise am breiten Ende des Grundrahmens 11 schwenkbar gelagert sein und somit nach hinten geklappt werden. Hierdurch entsteht zwischen den Seitenwänden 13, 14 genug Raum, um diese nach innen zu klappen. Um mehrere solcher Rollcontainer ineinander schieben zu können, würden die Seitenwände so weit aufeinander zu geklappt, die sie parallel zueinander liegen, d.h. die Seitenwand 13 liegt beispielsweise vor der Seitenwand 14.

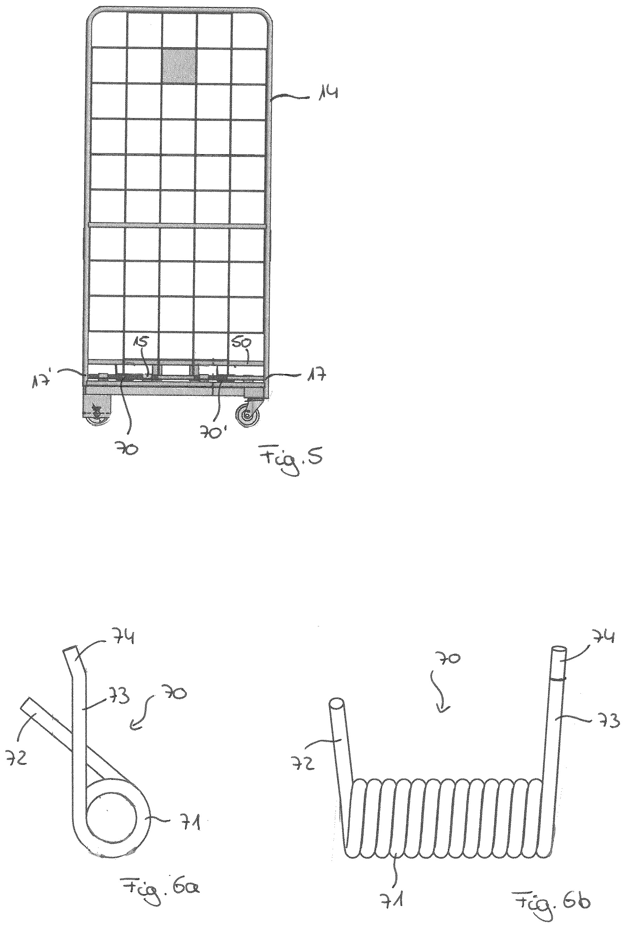

In der in Fig. 1 gezeigten Ausführungsform eines Rollcontainers 10 ist jedoch vorgesehen, dass die Bodenplatte 12 seitlich in Richtung der Seitenwand 14 hochgeklappt wird. Die Schwenkachse für die Bodenplatte 12 befindet sich somit im unteren Bereich der Seitenwand 14. Hierzu können an dieser Seite der Bodenplatte 12 beispielsweise ein oder mehrere Schwenkhalterungen 15 vorgesehen sein, die eine Schwenkstange 60 bandförmig umschließen. Die Schwenkstange 60 kann in zwei Aufnahmen 17 und 17' an der Seitenwand 14 gehalten sein (Fig. 5). Auf der gegenüberliegenden Seite der Bodenplatte 12 sind dagegen mehrere bogenförmige Auflagen 16 vorgesehen, mit denen die Bodenplatte 12 in ihrer horizontalen Lage auf einer weiteren Stange am unteren Ende der Seitenwand 13 aufliegen kann. Die ringförmigen Schwenkhalterungen 15 umschließen die Schwenkstange 60 hingegen vorzugsweise vollständig. Eine beispielhafte Ausführung dieser Schwenkhalterungen 15 und Auflagen 16 ist auch den Figuren 4a und 4b zu entnehmen.

Die Auflagen 16 müssen jedoch nicht bogenförmig ausgebildet sein wie in dem dargestellten Ausführungsbeispiel, sondern sie können auch eine andere Form haben. Beispielsweise kann es sich auch um ein oder mehrere L-Profile handeln, die an der Bodenplatte 12 angebracht sind und von dieser abstehen, so dass die Bodenplatte mit einem Schenkel eines L-Profils auf einer Stange zur Auflage kommt. Auch die Auflagebreite und Anordnung der Auflagen 16 kann variieren. Neben mehreren schmalen Auflagen, die über die Breite der Bodenplatte 12 verteilt sind, kann insbesondere auch eine einzige durchgehende oder mittige Auflage einer gewissen Breite vorgesehen werden, die eine ausreichende Auflagefläche bietet. Hierzu hat sich beispielsweise ein mittiges L-Profil mit einer Breite in der Größenordnung von 100mm bis 200mm als geeignet erwiesen.

Fig. 5 zeigt nochmals eine Seitenansicht des Rollcontainers 10 mit der Seitenwand 14. Hierbei ist ersichtlich, dass etwas oberhalb der Schwenkstange 60 eine Querstrebe 50 an der Seitenwand 14 vorgesehen ist. Diese Querstrebe hat vorzugsweise einen größeren Querschnitt als die Drähte der Maschung der Seitenwand 14 und bildet so eine stabile Strebe aus.

Um die Bodenplatte 12 in einer aufrechten Position zu halten, ist zwischen der Seitenwand 14 und der Bodenplatte 12 ein Haltemechanismus in Form eines Federmechanismus vorgesehen. Dieser umfasst wenigstens ein Federelement, welches zwischen der Seitenwand 14 und der Bodenplatte 12 eingespannt sind. Die Einspannung erfolgt so, dass eine Federkraft die Bodenplatte 12 in ihre aufrechte Lage drückt. Hierzu können an der Schwenkstange 60 beispielsweise zwei Federn 70, 70'angebracht sein, wie sie den Figuren 1 und 5 zu entnehmen sind. Es können jedoch auch andere Federanordnungen eingesetzt werden.

Fig. 6a zeigt eine Queransicht einer solchen Feder, während Fig. 6b eine Längsansicht der Feder zeigt. Bei der Feder 70 handelt es sich um eine Spiralfeder, deren Wicklung auf Torsion beansprucht ist. Hierzu weist die Feder 70 eine spiralförmige Federwicklung 71 auf, an deren Enden zwei Drähte 72 und 73 frei abstehen. Ein freies Drahtende 73 weist dabei vorzugsweise ein abgeknicktes Endstück 74 auf. Mit diesem Endstück 74 kann die Feder 70 an der Seitenwand 14 eingespannt oder sogar fixiert werden.

Fig. 6a zeigt die Feder 70 dabei im ungespannten Zustand. In diesem Zustand weisen die freien Drahtenden 72 und 73 im Wesentlichen in die gleiche Richtung, wobei sie sich überschneiden können. Werden die Drahtenden hingegen voneinander weggedrückt, wird die Feder 70 gespannt, so dass die resultierende Federkraft die beiden Drahtenden 72 und 73 aufeinander zu drückt.

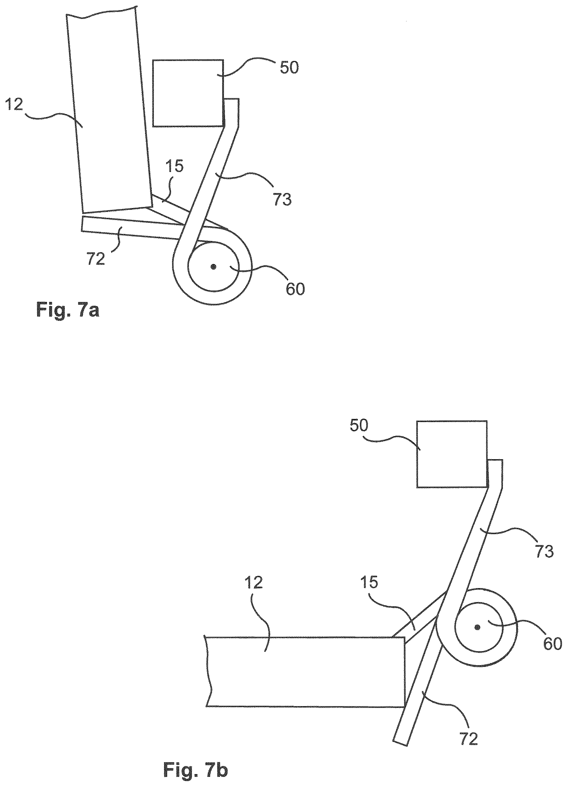

Die Federkraft der Federn 70, 70' wird dazu genutzt, die Bodenplatte 12 in ihrer aufrechten Lage zu halten. Fig. 7a zeigt diese Funktion anhand der Bodenplatte in der horizontalen Lage, während Fig. 7b die Bodenplatte 12 in der aufrechten Lage zeigt. Dabei umgibt die Federwicklung 71 der Feder 70 die Schwenkstange 60 der Seitenwand 14 spiralförmig. Ein Drahtende 73 ist mit seinem abgewinkelten Endstück 74 an der Querstrebe 50 der Seitenwand 14 eingespannt. Diese Einspannung kann lösbar sein, das Endstück 74 könnte aber beispielsweise auch an die Querstrebe angeschweißt sein. Die Feder 70 ist so weit tordiert, dass das andere Drahtende 72 unterhalb der horizontal liegenden Bodenplatte 12 liegt. Die Federkraft der Feder 70 bringt dabei eine Kraft auf diese Kante der Bodenplatte 12 auf, welche die Bodenplatte 12 nach oben drückt.

Die Federkraft und Einspannung der beiden Federn ist dabei aber vorzugsweise so ausgelegt, dass sie nicht in der Lage sind, die Bodenplatte 12 ohne weiteres um die Schwenkstange 60 herum nach oben zu klappen. Ansonsten müsste die Bodenplatte in dieser Stellung fixiert werden, um ein ungewolltes Abheben vom Grundrahmen zu verhindern. Vielmehr kann vorgesehen sein, dass die Federn die Schwenkbewegung nach oben lediglich unterstützen. Wird die Bodenplatte 12 leicht angehoben, was beispielsweise durch eine leichte Fußbewegung von unten erfolgen kann, sorgt die Federkraft der Feder 70 dafür, dass die Bodenplatte 12 selbsttätig weiter in ihre aufrechte Lage schwenkt. Die Federkraft reicht ferner dazu aus, die Bodenplatte 12 in dieser Lage zu halten. Sie muss somit nicht zusätzlich mit Befestigungsmitteln an der Seitenwand 14 fixiert werden.

Fig. 7b zeigt diese aufrechte Lage der Bodenplatte 12 in Verbindung mit der veränderten Lage des Drahtendes 72. Soll die Bodenplatte 12 wieder heruntergeklappt werden, kann dies mit einem leichten Stoß nach unten erfolgen. Sobald die Bodenplatte eine bestimmte Winkellage erreicht, wird sie durch ihr Gewicht gegen die Federkraft der Feder 70 nach unten fallen und mit ihren Auflagen 16 auf der gegenüberliegenden Stange der Seitenwand 13 zum Liegen kommen. Die Federkraft der Federn reicht jedoch aus, um ein Lösen der Bodenplatte 12 aus ihrer aufrechten Lage zu verhindern, wenn diese lediglich bei einer Bewegung des Rollcontainers 10 leicht hin- und her schwankt.

### Bezugszeichenliste:

- 10: Rollcontainer, Transportgestell
- 11: Grundrahmen
- 12: Bodenplatte
- 13,14: Seitenwand
- 15: Schwenkhalterung
- 16: Auflage
- 17,17': Aufnahme
- 20,20',20",20"": Rolle, Rad
- 21,22: Ausleger
- 30,30': Schwenkbolzen
- 40,40': Radkasten
- 41: Rahmenstrebe
- 50: Querstrebe
- 60: Schwenkstange, Schwenkachse
- 70,70': Feder
- 71: Federwicklung
- 72,73: Drahtende
- 74: Endstück

## Patentansprüche

1. Rollcontainer (10), umfassend einen sich horizontal erstreckenden Grundrahmen (11), an dessen einer Seite zwei sich gegenüber liegende, vertikale Seitenwände (13;14) um eine vertikale Achse schwenkbar angebracht sind, wobei der Rollcontainer (10) ferner eine um eine horizontale Schwenkachse (60) klappbare Bodenplatte (12) aufweist, die aus einer im Wesentlichen horizontalen Lage oberhalb des Grundrahmens (11) und zwischen den beiden Seitenwänden (13;14) in eine aufrechte Lage schwenkbar ist,
**dadurch gekennzeichnet, dass** der Grundrahmen (11) trapezförmig ausgeformt ist und die vertikalen Seitenwände (13; 14) an seiner breiteren Seite um eine vertikale Achse schwenkbar angebracht sind, wobei die Bodenplatte (12) schwenkbar am unteren Ende einer Seitenwand (14) angebracht ist, und im Bereich der Schwenkachse (60) der Bodenplatte (12) ein Haltemechanismus vorgesehen ist, der dazu ausgebildet ist, die Bodenplatte (12) an einem Herunterklappen aus der aufrechten Lage zu hindern, wobei die Bodenplatte (12) schwenkbar an einer horizontalen Schwenkstage (60) aufgehängt ist und der Haltemechanismus die Bodenplatte (12) durch Federkraft im Bereich der Schwenkachse (60) an einem Drehen um die Schwenkachse (60) hindert, indem wenigstens eine Torsionsfeder (70;70') spiralförmig um diese Schwenkstange (60) herum gewunden ist, und die Drahtenden (72;73) der Torsionsfeder (70;70') so zwischen der Bodenplatte (12) und der genannten Seitenwand (14) eingespannt sind, dass die Torsionsfeder (70;70') bei einer Bewegung der Bodenplatte (12) aus der aufrechten Lage in die horizontale Lage gespannt wird.

2. Rollcontainer nach Anspruch 1,
**dadurch gekennzeichnet, dass** die Schwenkstange (60) in wenigstens einer Aufnahme (17;17') an einer Seitenwand (14) gehalten ist.

## Claims

1. Roll container (10), comprising a horizontally extending base frame (11), on which on one side there are mounted two opposing vertical walls (13;14) pivotally mounted on a vertical axis, wherein the roll container (10) further comprises a horizontal pivot axis (60) on a foldable base plate (12), which can be pivoted from a horizontal position above the base frame (11) and between the two side walls (13;14) is pivotable in an upright position,
**characterized by the fact** that the base frame (11) is of trapezoidal shape and the vertical side walls (13;14) are pivotally mounted on its wider side around a vertical axis, where the base plate (12) is pivotable on the lower side of a side wall(14), and in the area of the pivot axis (60) of the base plate (12) a retaining mechanism is provided, which is designed to prevent the base plate (12) from being folded down from the upright position, wherein the base plate (12) is pivotally suspended on a horizontal pivot (60) and the holding mechanism prevents the base plate (12) from rotating around the pivot axis (60) by spring force in the area of the pivot axis (60), where at least one torsion spring (70;70') is spirally winded around this pivot rod (60), and the wire ends (72;73) of the torsion spring (70;70') are clamped between the base plate (12) and the side wall (14), so that the torsion spring (70;70') in tensioned from the upright position into the horizontal position during a movement of the base plate (12).

2. Roll container according to claim 1
**characterized by the fact** that the pivot axis (60) is held in at least one place (17;17') on a side wall (14).

## Revendications

1. Conteneur à roulettes (10), comprenant un cadre principal (11) s'étendant horizontalement, sur un côté duquel deux parois latérales reposant verticalement l'une en face de l'autre (13; 14) sont montées de manière pivotante autour d'un axe vertical, alors que le conteneur à roulette (10) comporte quant à lui une plaque de fond rétractable (12) autour d'un axe horizontal pivotant (60), pouvant pivoter en position verticale au-dessus du cadre principal (11) et entre les deux parois latérales (13;14) à partir d'une position principalement horizontale, **caractérisé, par le fait que** le cadre principal (11) est en forme de trapèze et que les parois latérales verticales (13;14) sont tournées sur son côté le plus large autour d'un axe vertical, cependant que la plaque de fond (12) est tournée vers l'extrémité inférieure d'une paroi latérale (14), et que du côté de l'axe pivotant (60) de la plaque de fond (12),un mécanisme de maintien est prévu, lequel est
conçu pour empêcher à la plaque de fond (12) de se rabattre en position verticale, ce alors que la plaque de fond (12) est accrochée à une barre horizontale de basculement (60) de façon à pouvoir pivoter et que le mécanisme de maintien empêche la plaque de fond (12) au moyen d'un ressort à l'emplacement de l'axe pivotant (60) de tourner autour de l'axe pivotant (60), **par le fait qu'**au moins un ressort de torsion (70;70') en forme de spirale est enroulé autour de la barre de basculement (60), et que les extrémités des câbles (72;73) des ressorts de torsion (70;70') sont tendues entre la plaque de fond (12) et la paroi latérale désignée (14), afin que les ressorts de torsion (70;70') soient tendus lors d'un placement de la plaque de fond (12) de la position verticale à la position horizontale.

2. Conteneur à roulettes selon la revendication 1,
**caractérisé par le fait que** la barre de basculement (60) est tenue sur au moins une photo (17; 17') par une des parois latérales (14).
